# EUROPEAN PATENT SPECIFICATION

(11) **EP 1 341 605 B1**
(45) Date of publication and mention of the grant of the patent: **31.03.2010**
(21) Application number: 01987276.1
(22) Date of filing: 05.12.2001
(51) Int. Cl.: B01J 20/28

(54) **ADSORBENT SHEET AND PROCESS FOR PREPARING THE SHEET**
ADSORPTIVES BLATT UND VERFAHREN ZU DESSEEN HERSTELLUNG
FEUILLE ADSORBANTE ET PROCÉDÉ DE PRÉPARATION DE LA FEUILLE

(30) Priority: 06.12.2000 US 731404
(43) Date of publication of application: 10.09.2003
(73) Proprietor: UOP LLC, Des Plaines, IL 60017 (US)
(72) Inventor: TANG, Man-Wing, DesPlaines, IL 60017 (US); DUNNE, Stephen R., Des Plaines, IL 60017 (US); COUGHLIN, Peter K., Des Plaines, IL 60017 (US)
(74) Representative: Hayes, Adrian Chetwynd
(86) International application number: PCT/US2001/046413
(87) International publication number: WO 2002/045847

(56) References cited:
- EP-A- 0 738 535
- WO-A-98/30326
- US-A- 4 455 187
- US-A- 4 740 219
- US-A- 4 925 459
- US-A- 5 401 706
- US-A- 5 585 145

## Description

### BACKGROUND OF THE INVENTION

This invention relates in general to desiccant systems, and particularly to an improved process and apparatus for separating and drying gases with improved efficiency and lower cost. More particularly, the present invention relates to an improved adsorbent carrier and its use in desiccant and sorption systems.

For desiccant applications in recent years, various techniques of disposing molecular sieves in or on a substrate have been employed to improve the contact between the gas being treated and the adsorbent, while minimizing the heat transfer effects of the medium supporting the adsorbent. Many of these techniques disclose the use of thin sheets or layers of fibrous material having been impregnated with molecular sieves. The sheets containing molecular sieves or the coated surfaces are typically disposed in a rotating cylinder or wheel having a plurality of small channels. During operation, the wheel is rotated while performing the functions of adsorbing water or volatile organic compounds (VOC's) from the incoming fluid stream in the adsorption portion of the cycle and regenerating the adsorbent in the desorption portion of the cycle. Because the wheel is continuously in motion, there is a relatively short residence time in the regenerative portion of the cycle which limits the degree to which the portion of the wheel being regenerated can be returned to adsorption conditions. Typically adsorption wheels are purged with a heated regenerant fluid and then cooled to return the adsorbent to effective adsorption conditions.

US-A-6130263 and US-A-5911937 disclose a method for the preparation of moisture absorbing desiccant entrained polymers. These patents disclose how the polymer can inhibit the desiccant properties of the adsorbent and how the polymer acts as a moisture barrier which can prevent the desiccant agent from coming into contact with the gas to be treated. Processes are disclosed in US-A-6130263 for the blending of a channeling agent into the molten polymer at the time the desiccant agent is added to the polymer such that the channeling agent forms passages in the mixture through which moisture can reach the entrained desiccating agent after the molten polymer is resolidified.

US-A-4886769 discloses the problem of employing synthetic zeolite in such applications and specifically points out the problems of incorporating zeolites into paper during the paper forming process. The process is expensive because the yield is typically less than 50 percent of the zeolite retained in the finished paper, and in the finished paper the zeolite has low adhering properties. The reference points out that unless the regeneration conditions are higher than 140°C, the use of such zeolites is impractical because the zeolites can not be effectively regenerated to remove the adsorbed compounds. Furthermore, the reference suggests the problem of low adhering properties of zeolite powders which can result in the separation of the adsorbent powder from the paper during the successive heating and cooling and fluid pressures experienced in the desiccant process. US-A-4886769 discloses a method of dispersing a zeolite powder on a fibrous surface in an aqueous solution of water glass, drying the matrix and then applying an aqueous solution of metal salts to produce a strong hydrogel in which the zeolite and the metal salts are uniformly distributed. In this manner the zeolite is held in a metal silicate aerogel to the nucleus of the matrix..

An example of the type of adsorbent paper for use in desiccant and dehumidification processes is disclosed in US-A-5650221 to Belding et al. The adsorbent paper layer of US-A-5650221 is comprised of an improved support material, fibrous material, binders, and high levels of desiccant or adsorbent material. The fibrous material include cellulosic fibers, synthetic fibers and mixtures thereof. Fibrillated fibers, that is, fiber shafts which are split at their ends to form fibrils, i.e., fine fibers or filaments much finer than the fiber shafts are incorporated into the paper to overcome the low adhering problem of the zeolites by trapping the zeolite powder within the fibrillated fibers. Examples of fibrillated, synthetic organic fibers useful in the adsorbent paper disclosed are fibrillated aramid and acrylic fibers. An example of such a fiber is available from E.I. du Pont de Nemours & Company under the designation KEVLAR®. The desiccant or adsorbent may be incorporated in the paper during fabrication of the paper, or the paper may be formed and the desiccant or adsorbent coated, or a combination of adsorbent incorporation during paper making and coating with adsorbent thereafter. The adsorbent paper has a thickness of from 0.13mm (5 mils) to 0.5mm (20 mils) and comprises at least 50 percent adsorbent.

SU1763000 A1 discloses a method of obtaining a formed pellet comprising a molecular sieve by encapsulating the molecular sieve in a polymer. According to the method, the molecular sieve zeolite is saturated with water, contacted with a polymer solvent which is heated to the boiling point of the solvent, blown with air to fix the polymer on the molecular sieve zeolite, and washed with heated water to remove the residual solvent. The result is a membrane-like polymer structure formed on the molecular sieve zeolite particle surface. Preloading the molecular sieve zeolite with water is required so that during the contacting with the heated polymer solvent, steam is released by the zeolite which prevents the pores of the zeolite from being blocked.

Adsorption systems using adsorptive surfaces which are formed with adsorbents in the paper making step or produced by impregnating the paper following paper manufacture suffer from significant losses of the adsorbent material during the manufacturing step. The low adherence of the zeolite powder to the paper can result in additional zeolite losses during operation. Furthermore, adsorbent paper looses flexibility and becomes brittle with high adsorbent loading on the paper, restricting the stability of the adsorbent paper during subsequent forming operations such as corrugating and bending. To overcomes this problem, wheel and exchanger surfaces were often coated after fabrication. US-A-5518977 which is hereby incorporated by reference, relates to sorption cooling devices which employ adsorbent coated on metal surfaces to obtain a high cooling coefficient of performance. US-A-5585145 discloses a method for providing an adsorbent coating on a heat exchanger which comprises applying a flowable emulsion including a binder agent, water and a solid adsorbent material to the surface of the heat exchanger. This disclosure states that the binder can be an adhesive and that the thickness of the adsorbent coating can be dipped, painted or sprayed with a drying step comprising heating the layer at temperatures greater than 150°C in order to obtain a durable adsorbent coating structure.

US 4,925,459 discloses a mixture of at least two constituents A and B submitted to selective separation across a selective membrane. The membrane comprises an active layer comprising particles of a selective solid dispersed in a continuous non-porous and non-elastomeric polymer phase and a porous support.

US 4,740,219 discloses a fluid feed mixture, either liquid or gaseous in nature, which may be subjected to a gas enrichment separation process.

EP0738535 discloses an adsorbent, supple, filter fabric composed of an air-permeable, supple, textile carrier material having adsorbent particles fixed on it by means of a thermoplastic agent.

US 4,455,187 discloses a filter sheet material composed of an air-permeable, flexible especially textile supporting layer, on which there is imprinted in a certain pattern a mixture containing an adsorbent in powder form and a polymeric binding agent, the adsorbent covering up to 90% of the surface of the supporting layer.

JP-5-245349A discloses an antimicrobial liquid separation membrane, which is made up of a polymeric polymer containing an electrically charged molecule comprised of at least 0.01 wt% silver type zeolite microparticles in a uniform dispersion.

Traditionally coated paper and ceramic surfaces, which are coated after the fabrication of the surface into wheels, have the problem of uneven distribution and typically require coating at a lower adsorbent loading than pre-coated materials to avoid plugging of small passageways and channels which are characteristic of such devices. Generally this results in uneven heat transfer and poor efficiency. Adsorbent materials are sought which are more easily manufactured at high adsorbent loading levels which have the flexibility to be rolled and formed despite containing a significant amount of adsorbent.

It is an objective of the present invention to provide an adsorbent material that has a high adsorbent loading and a high flexibility for use in sorption processes.

It is an objective of the present invention to provide an adsorbent material which comprises a uniform layer of adsorbent which can be produced with a minimum of adsorbent loss.

It is an objective of the present invention to provide an adsorbent material which is effective over a wide functional range of conditions and adsorption applications including dehumidification, odor (VOC) removal, sorption cooling, and gas separation.

### SUMMARY OF THE INVENTION

The present invention relates to a method for producing efficient and structurally stable adsorptive materials that can be employed in sorption devices. According to the present invention, flat sheet adsorption materials having an asymmetric structure are produced in a uniform layer by means of immersion precipitation of a molecular sieve/polymer solution. The asymmetric structure provides an adsorbent sheet which has one side comprising a dense polymer surface and a reverse side comprising a dense adsorbent surface. The flat sheet material of the present invention comprises up to 86 wt-% zeolite molecular sieve while still retaining sufficient flexibility for the flat sheet material to be rolled or formed for use in a sorption device such as a wheel. Surprisingly, it was found that in the process of forming the flat sheet material of the present invention, essentially all of the zeolite molecular sieve is incorporated into the flat sheet material and zeolite losses in production are essentially eliminated while the zeolite retains essentially all of its original sorption capacity. Paper impregnated with adsorbent has been difficult to bond to smooth metal surfaces and the art has turned to less efficient spray and dipping techniques. One unexpected benefit of the present invention is that the dense polymer side of the adsorbent sheet can easily be bonded to smooth surfaces such as aluminum, glass, or stainless steel and the like, to provide an exposed stable adsorbent surface for use in sorption processes. When the adsorbent sheet of the present invention is fabricated on a woven or non-woven fabric support, the fabric support may be peeled away to expose the adsorbent surface to enhance contact with the adsorbent. It was also discovered that the adsorbent sheet can be built up in successive layers on either side of the adsorbent sheet by repeating the coating process to provide a greater adsorbent loading per unit of surface area.

In one embodiment, the present invention is a method for preparing a flexible flat sheet sorption material. A film forming polymer is dissolved in an organic solvent to form a polymer solution. A selective adsorbent is dispersed into the organic solvent to form a uniform dispersion dope. The uniform dispersion dope is cast to form a fully permeable, flexible adsorbent sheet having an asymmetric structure and being of substantially uniform thickness. The layer is washed with an anti-solvent to remove the solvent to form the flexible adsorbent sheet.

In another embodiment, the present invention is a flexible adsorbent sheet for use in sorption processes. The adsorbent composite comprises a selective adsorbent and a polymer binder disposed and cast on a porous substrate to form the flexible adsorbent sheet. The flexible adsorbent sheet has a substantially uniform thickness, an asymmetric structure, and is essentially fully permeable, wherein said selective adsorbent is a zeolite, and said zeolite comprises between 50 and 86 wt-% of said flexible adsorbent sheet; and wherein said sheet having an asymmetric structure has one side comprising a dense polymer surface and a reverse side comprising a dense adsorbent surface.

### DETAILED DESCRIPTION OF THE INVENTION

In accordance with the present invention, an adsorbent is bound in a polymer and cast into an adsorbent sheet of essentially uniform thickness and having an asymmetric structure for use in sorption applications such as dehumidification, removal of an adsorbable material such as a volatile organic material from gases, or for use in the separation of adsorbable components from a gas stream, or for use a desiccant in a refrigeration system, and etc. The adsorbent sheet of the present invention comprises an adsorbent and a polymer. The adsorbent may comprise powders of crystalline or amorphous compositions capable of adsorbing and desorbing the adsorbable compound. Examples of such crystalline adsorbents include silica gels, activated aluminas, activated carbon, molecular sieves and mixtures thereof. Molecular sieves include zeolite and non-zeolite molecular sieves. Other materials which can be used as adsorbents include halogenated compounds such as halogen salts including chloride, bromide, and fluoride salts as examples. The adsorbents are zeolites.
Up to 86 wt-% of the adsorbent layer is a zeolite molecular sieve. The adsorbents incorporated into the adsorbent sheet of the present invention comprise between 50 and 86 wt-% of the adsorbent sheet.

The pore size of the zeolitic molecular sieves may be varied by employing different metal cations. For example, sodium zeolite A has an apparent pore size of 4 Å units, whereas calcium zeolite A has an apparent pore size of 5 Å units. The term "apparent pore size" as used herein may be defined as the maximum critical dimension of the molecular sieve in question under normal conditions. The apparent pore size will always be larger than the effective pore diameter, which may be defined as the free diameter of the appropriate silicate ring in the zeolite structure.

Zeolitic molecular sieves in the calcined form may be represented by the general formula;

Me_{2/n}O : Al₂O₃ : xSiO₂

where Me is a cation, x has a value from 2 to infinity, and n is the cation valence. Typical well-known zeolites which may be used include FAU-type zeolites such as faujasite, Zeolite X, and Zeolite Y, those zeolites having the structure of chabazite, also referred to as Zeolite D, clinoptilolite, erionite, ferrierite, mordenite, MFI, Zeolite A, Zeolite L, Zeolite Beta, and Zeolite P. The preferred zeolite compositions suitable for the present invention include synthetic and naturally occurring forms of zeolite A, zeolite X, zeolite Y, cation ion exchanged forms of zeolite X, cation ion exchanged forms of zeolite Y, and mixtures thereof. Detailed descriptions of some of the above identified zeolites may be found in D. W. Breck, ZEOLITE MOLECULAR SIEVES, John Wiley and Sons, New York, 1974, and are hereby incorporated by reference. Descriptions of zeolite structures may be found in W. M. Meier et al., ATLAS OF ZEOLITE STRUCTURE TYPES (4th Edition), Elsevier, London, 1996, and is incorporated by reference. As synthesized, molecular sieves will contain some alkali metal templating agent in the pores. These metals are described as exchangeable cations, meaning that they can be exchanged for other (secondary) cations. Generally the exchangeable cations can be exchanged for other alkali metal cations (K⁺, Na⁺, Rb⁺, Cs⁺), alkaline earth cations (Mg²⁺, Ca²⁺, Sr²⁺, Ba²⁺), trivalent cations of the Lanthanide series, Group VIII cations, Group IB cations, hydronium ions or mixtures thereof. The methods used to exchange one cation for another are well known in the art. The particular cation or mixture thereof present in the final molecular sieve will be dependent on the particular use and the specific composition being used.

The general formula for the calcined form of a molecular sieve composition known commercially as type 13X is:

1.0±0.2Na₂O:1.00Al₂O₃:2.5±0.5SiO₂

Type 13X has a cubic crystal structure which is characterized by a three-dimensional network with mutually interconnected intracrystalline voids accessible through pore openings which will admit molecules with critical dimensions up to 10 Å. The void volume is 51 vol-% of the zeolite and most adsorption takes place in the crystalline voids. Other zeolites suitable for use according to the present invention are those having a high silica content, i.e., those having silica to alumina ratios greater than 10 and typically greater than 100. One such high silica zeolite is silicalite, as the term used herein includes both the silicapolymorph disclosed in US-A-4061724 and also the F-silicate disclosed in US-A-4073865, hereby incorporated by reference. More preferably, the adsorbent is selected from the group consisting of Y-54, Y-74, Y-84, Y-85, low cerium mixed rare earth exchanged Y-84, calcined rare earth exchanged LZ-210 at a framework SiO₂/Al₂O₃ mol equivalent ratio of less than 7.0 and mixtures thereof. Most preferably, the adsorbent comprises a Y zeolite having a trivalent cation in the β-cage of the zeolite structure.

The adsorbent layer of the present invention is produced by means of a method which binds the adsorbent into a uniform layer with a polymer. The method is similar to methods disclosed in US-A-3133132, for the production of a porous membrane for separating water from saline solutions. The method of the present invention differs from methods for producing membranes in that the resulting membrane material is asymmetric and that skin is essentially completely permeable. Semipermeable asymmetric cellulosic "skinned" separation membranes formed by phase inversion and solvent exchange methods are known (See US-A-3133132). Such membranes are characterized by a thin, dense, selectively semipermeable surface "skin" and a less dense void-containing, non-selective support region, with pore sizes ranging from large in the support region to very small proximate to the "skin." The membranes made in accordance with the above mentioned method had to be keep wet to avoid damage to the membrane structure. Critical to the manufacture and use of a membrane is the permeability and selectivity of the membrane. Permeability of the adsorbent layer of the present invention is not a consideration. The membranes produced according to US-A-3133132 differ from the adsorbent sheet of the present invention in that the adsorbent sheet of the present invention is essentially fully permeable and provides essentially no membrane selectivity in the separation of a component from a gas mixture. In tests conventionally performed on membranes for determining a selectivity (alpha) based on the ratio of carbon dioxide permeance to methane permeance, it was found that the adsorbent sheets have essentially no selectivity (alpha < 1). Surprisingly, the adsorbent sheet of the present invention comprises a structure wherein the adsorbent is concentrated on a side of the membrane, opposite to a skin side, and the polymer is concentrated on the skin side forming a support and binding the individual adsorbent particles without reducing the sorption capacity of the adsorbent. Unlike membrane production, it is possible, and desirable to apply the adsorbent layer of the present invention to at least one side of a fabric substrate. It was found that the fabric layer can be stripped off of the polymer bound adsorbent to provide a flexible adsorbent sheet for application to other surfaces. Because the asymmetric structure of the adsorbent sheet provides a dense polymer side, the polymer side of the adsorbent sheet can be disposed on smooth surfaces such as aluminum, aluminum foil, stainless steel, glass, plastic, ceramic, and the like by conventional bonding techniques using adhesives or by employing the polymer directly. After the adsorbent sheet is in place for example on the smooth surface of a heat exchange device, or on the vanes of an adsorption wheel device, the fabric substrate can be peeled away to expose the dense adsorbent side of the adsorbent sheet. Also, the fabric layer, or substrate, can be retained in the structure to form a two sided adsorbent sheet structure with adsorbent concentrated on the inside surfaces bonded to both sides of the fabric substrate. The adsorbent sheet of the present invention can be produced by the successive buildup of adsorbent layers on either or both sides of the fabric layer to provide any adsorbent density desired. For example, uniform adsorbent densities of from 40 to 400 g per square meter can be produced in the asymmetric structure of the present invention. The fabric substrate can be a non-woven or woven material. Preferred materials include nylon and polyester. The adsorbent sheet can also be employed with a fabric layer having a single layer of polymer bound adsorbent in an asymmetric structure prepared in accordance with the present invention. In making some cellulosic membranes, extensive drying techniques had to be employed to prevent the membrane from forming cracks which would destroy the selectivity. The adsorbent layer of the present invention can be dried and re-wetted without destroying its adsorptive properties or experiencing any loss of zeolite powder. In addition, this re-wetting property permits a fabric substrate to be coated on both sides to provide an additional layer of uniformly dispersed adsorbent on the fabric substrate. The re-wetting property of the adsorbent material of the present invention also applies to adsorbent layers comprising cellulose acetate. This re-wetting property permits the use of adsorbent materials of the present invention in sorption processes including sorption cooling and refrigeration wherein the adsorbent material can become immersed or saturated with the refrigerant and the adsorbent material is subject to cyclic drying and re-wetting as part of the cyclic process.

The adsorbent layer of the present invention can comprise a cellulosic or a polymeric material to support and bind the adsorbent. The membrane substrate of the present invention includes cellulosic membranes and membranes formed from other polymers such as polysulfone, polyethersulfone, polyamide, polyimide, polyetherimide, cellulose nitrate, polyurethane, polycarbonate, polystyrene, etc. The term "cellulosic membrane" in the context of the instant invention includes cellulose ester membranes such as cellulose acetate, cellulose diacetate, cellulose triacetate, cellulose propionate, cellulose butyrate, cellulose cyanoethylate, cellulose methacrylate and mixtures thereof. These membranes may be flat film or hollow fiber. Particularly preferred membrane layers comprise cellulose acetate or polysulfone. Surprisingly, the adsorbent layer of the present invention can be produced with a loading of between 50 to 86 wt-% solid adsorbent to produce an essentially uniform layer in an asymmetric structure containing a uniform distribution of adsorbent material with essentially no loss of valuable solid adsorbent. Methods of producing similar adsorbent loading by traditional paper making or felting operations resulted in the production of layers with uneven distribution of adsorbent and with significant losses of up to 50 wt-% of the solid adsorbent during the manufacturing process. In addition, the adsorbent sheet of the present invention was found to be more flexible and have a more uniform and smooth appearance than materials produced either by impregnating paper or incorporating adsorbent materials into the paper during the paper making process. The thus formed asymmetric adsorbent sheets can be disposed on active sorption surfaces, such as continuous belts, wheels, vanes, tubes, heat exchanger surfaces and the like and used in dehumidification, desiccant, and sorption cooling processes. The adsorbent sheets of the present invention can be bonded by any bonding means including mechanical fasteners or adhesives to the active sorption surfaces which come into contact with the fluid being sorbed.

The invention is further illustrated by the following examples which are illustrative of specific modes of practicing the invention and are not intended as limiting the scope of the invention defined in the claims.

### EXAMPLE I

The following procedure was employed in the preparation of the adsorbent sheet of the present invention. A casting dope comprising 10.4 wt-% polymer such as polysulfone, dissolved in 48 wt-% of an appropriate solvent such as 1-methyl-2-pyrrolidone, and 41.6 wt-% of a solid adsorbent such as a zeolite molecular sieve. In one instance, a casting dope mixture was prepared by combining 356 grams of polysulfone, in 1643.8 grams of 1-methyl-2-pyrrolidone (NMP) to form a solvent polymer mixture. After the polysulfone was completely dissolved in the solvent, 1424.8 grams of a zeolite 13X adsorbent was uniformly dispersed in the solvent polymer mixture to form the casting dope. The casting dope was degassed under mild vacuum conditions at ambient temperature of 20°C for 1 hour. Following degassing, the casting dope was applied to one side of a cloth substrate in a uniform thickness ranging between .08 mm (3 mils) to 0.5 mm (20 mils). The uniform thickness of the casting dope was obtained by applying the casting dope on one side of a moving web of the cloth substrate to form a casting layer. The casting layer was immersed into an anti-solvent bath comprising water to leach out the organic solvent leaving a wet flexible adsorbent layer. Preferably the solvent is essentially completely removed in at least one immersion step. The wet flexible adsorbent layer was first dried in the presence of air at a temperature of 60° to 70°C for 20 to 30 minutes. The wet flexible adsorbent layer was further dried in a second drying step in a vacuum oven at a temperature ranging between 100° to 200°C for at least one hour. Preferably, the second drying step ranges from 1 to 12 hours to produce a dry flexible adsorbent material. Surprisingly it was discovered that unlike membranes prepared in this manner, the dry flexible adsorbent material could be re-wetted without any adverse effect on the adsorbent material. Re-wetted dry cellulosic membranes generally loose their favorable properties when re-contacted with water. This advantage permitted the dry adsorbent material to be coated on the opposite side of the fabric substrate by repeating the above steps in order to achieve a maximum adsorbent loading.

### EXAMPLE II

A series of experiments were carried out according to the procedure of Example I using a casting dope comprising cellulose acetate, polysulfone, and polyamid polymer dissolved in NMP solvent with molecular sieves including 4A, 3A, 5A, 13X, mixtures of 4A and 13X, Y-zeolite, silicalite, and low cerium rare earth exchanged Y zeolite. The casting dope formulations used in preparing these adsorbent sheets is shown in Table 1. The adsorbent sheets comprised from 50 to 86 wt-% adsorbent and provided adsorbent loading from 44 to 380 g per square meter of adsorbent. The adsorbent sheets were cast on non-woven and woven nylon and polyester fabric.

### EXAMPLE III

The absorbent sheet of the present invention as prepared according to Example I was evaluated according to a conventional test to determine permeance and selectivity. A circular section having a cross-sectional area of 45 square cm(7 in²) was exposed to a feed gas having a composition of 10 mol-% carbon monoxide and 90 mol-% methane at a feed pressure of 240 kPa (35 psia), a flow rate of 45.1 cc/min and a temperature of 50°C. The permeance of the carbon dioxide was determine to be 0.0078 Sm³/day/m²/Pa and the permeance of the methane was determined to be 0.0080 Sm³/day/m²/Pa, yielding an alpha or selectivity of less than 1. A selectivity of 1 indicates that the adsorbent sheet has essentially no selectivity for use as a membrane for gas separation applications requiring a semipermeable membrane.

**TABLE 1**

| CASTING DOPE FORMULATION | | | | | | | |
|---|---|---|---|---|---|---|---|
| Polymer/No. Sides | Casting Dope Formulation | | | | | Adsorbent Thickness, mm | Adsorbent Loading, g/m² |
| | Polymer, wt-% | Solvent | Solvent, wt-% | Molecular Sieve(MS) (Fabric) | Polymer/MS | | |
| Cellulose Acetate/1-side | 7.7 | NMP** | 92.3 | 4A (Woven Nylon) | 20/80 | 0.13 | 44.3 |
| Cellulose Acetate/1-side | 14.3 | NMP | 85.7 | 4A (Woven Nylon) | 20/80 | 0.27 | 109 |
| Cellulose Acetate/1-side | 14.3 | NMP | 85.7 | 4A (Woven Nylon) | 20/80 | 0.44 | 165 |
| | | | | | | | |
| Polyamid/1-side | 14.3 | NMP | 85.7 | 4A (Woven Nylon) | 20/80 | 0.13 | 68 |
| Polyamid/1-side | 16.7 | NMP | 83.3 | 4A (Woven Nylon) | 20/80 | 0.18 | 125 |
| | | | | | | | |
| Polysulfone/1-side | 17.8 | NMP | 82.2 | 4A (Woven Nylon) | 20/80 | 0.10 | 89 |
| Polysulfone/1-side | 17.8 | NMP | 82.2 | 4A (Woven Nylon) | 20/80 | 0.16 | 126 |
| Polysulfone/1-side | 17.8 | NMP | 82.2 | 3A (Woven Nylon) | 20/80 | 0.16 | 132 |
| Polysulfone/1-side | 17.8 | NMP | 82.2 | 5A (Woven Nylon) | 20/80 | 0.16 | 134 |
| Polysulfone/1-side | 17.8 | NMP | 82.3 | 13X (Woven Nylon) | 20/80 | 0.16 | 142 |
| Polysulfone/2-side | 17.8 | NMP | 82.3 | 13X (Non-woven polyester) | 20/80 | 0.23 | 165 |
| Polysulfone/2-side | 12.5 | NMP | 87.5 | 13X (Non-woven polyester) | 15/85, 14/86 | 0.33 | 244 |
| Polysulfone/1-side | 17.8 | NMP | 82.3 | 13X (Non-woven polyester) | 20/80 | 0.30 | 268 |
| Polysulfone/1-side | 18.9 | NMP | 81.1 | 4A/13X (Non-woven polyester) | 20/80 | 0.24 | 180 |
| Polysulfone/1-side | 17.8 | NMP | 82.2 | Y-zeolite (Non-woven polyester) | 20/80 | 0.36 | 191 |
| Polysulfone/1-side | 17.8 | NMP | 82.2 | Silicalite(Non-woven polyester) | 20/80 | 0.27 | 195 |
| Polysulfone/1-side | 15.5 | NMP | 85.5 | RE-Y(Non-woven polyester) | 20/80 | 0.19 | 143 |
| Polysulfone/1-side | 14.3 | NMP | 85.7 | RE-Y (Woven polyester) | 20/80 | 0.34 | 239 |
| Polysulfone/2-side | 15.5 | NMP | 85.5 | RE-Y (Woven polyester) | 20/80 | 0.57 | 383 |

| | | | | | | | |
|---|---|---|---|---|---|---|---|
| ** NMP (N-methyl-2-pyrrolidone) | | | | | | | |

### EXAMPLE IV

The water adsorption capacity of the flexible adsorbent sheet of the present invention was evaluated by obtaining an adsorption isotherm for water adsorption. Water isotherms were determined for the flexible adsorbent sheet of the present invention at 25°C and 80°C in a conventional manner and compared to the water isotherm for an unbound adsorbent powder at the same conditions. The adsorbent employed in the adsorbent sheet and as the powder was a low cerium rare earth exchanged de-aluminized-Y zeolite. The results of the comparison are shown in Table 2. The flexible adsorbent sheet comprised a 0.076 mm aluminum foil coated on both sides with the polymer bound adsorbent in a uniform asymmetric layer 0.08 mm in thickness. The results shown in Table 2 indicate that the water loadings at the same water partial pressure were essentially the same for both the adsorbent sheet and the unbound adsorbent powder. It is believed that the asymmetric structure of the membrane exposes the adsorbent in a manner which does not significantly inhibit the adsorption process.

**TABLE 2**

| COMPARATIVE WATER ISOTHERMS | | | | |
|---|---|---|---|---|
| Pressure, kPa | Water Loading Adsorbent Sheet, wt-% | | Water LoadingAdsorbent Powder, wt-% | |
| | 25°C | 80°C | 25°C | 80°C |
| 0.1 | 12 | | 11 | |
| 0.3 | 18 | 4.0 | 20 | 3.8 |
| 0.5 | 21 | 5.5 | 24 | 5.5 |
| 1.6 | 24 | 9.0 | 27 | 8.4 |

## Claims

1. A flexible adsorbent sheet for use in sorption processes, said adsorbent sheet comprising a selective adsorbent and a polymer binder cast to form said flexible adsorbent sheet, having a substantially uniform thickness, an asymmetric structure and being essentially fully permeable, wherein said selective adsorbent is a zeolite, and said zeolite comprises between 50 to 86 wt-% of said flexible adsorbent sheet; and wherein said sheet having an asymmetric structure has one side comprising a dense polymer surface and a reverse side comprising a dense adsorbent surface.

2. The flexible adsorbent sheet of claim 1 wherein the zeolite selective adsorbent is selected from the group consisting of zeolite A, MFI, zeolite L, zeolite Beta, zeolite X, zeolite Y, cation exchanged formes of zeolite X, cation ion exchanged forms of zeolite Y, and mixtures thereof.

3. The flexible adsorbent sheet of any of claims 1 or 2 wherein the polymer binder comprises a polymer selected from the group consisting of polysulfone, polyethersulfone, polyamide, polyimide, polyetherimide, cellulose nitrate, polyurethane, polycarbonate, polystyrene, and mixtures thereof or is a cellulosic membrane selected from the group consisting of cellulose acetate, cellulose diacetate, cellulose triacetate, cellulose propionate, cellulose butyrate, cellulose cyanoethylate, cellulose methacrylate, and mixtures thereof.

4. The flexible adsorbent sheet of any of claims 1 to 3 further comprising a fabric layer disposed on a first side of said flexible adsorbent sheet, said first side consisting essentially of the selective adsorbent.

5. A method of preparing a flexible adsorbent sheet according to claim 1 comprising:
(a) dissolving a film forming polymer in an organic solvent to form a polymer solution;
(b) dispersing a selective adsorbent into the polymer solution to form a viscous dispersion dope;
(c) casting the viscous dispersion dope on a porous support to form an asymmetric cast layer of substantially uniform thickness;
(d) immersing the asymmetric cast layer in an anti-solvent to leach out the organic solvent and form a wet flexible adsorbent sheet; and
(e) drying the wet adsorbent sheet to form the flexible adsorbent sheet.

6. The method of claim 5 wherein the organic solvent is selected from the group consisting of dioxane, acetone, 1-methyl-2-pyrrolidone, dimethylformamide, and dimethylacetamide and the zeolite selective adsorbent is selected from the group consisting of zeolite A, zeolite L, MFI, mordenite, zeolite Beta, zeolite P, zeolite X, zeolite Y, cation ion exchanged forms of zeolite X, cation ion exchanged forms of zeolite Y, and mixtures thereof.

7. The method of claims 5 or 6 wherein the flexible adsorbent sheet having a uniform thickness has a first side and a second side, said first side being coated by steps (c) through (e) and further comprising coating either the first side or the second side by repeating steps (c) through (e) to increase the uniform thickness of the adsorbent sheet.

8. A neat exchange surface comprising a smooth surface having the flexible adsorbent sheet of claim 1 disposed thereon.

## Patentansprüche

1. Flexibler adsorbierender Bogen zur Verwendung in Sorptionsverfahren, wobei der adsorbierende Bogen ein selektives Adsorptionsmittel und einen Polymerbindemittelguss für die Bildung des flexiblen adsorbierenden Bogens umfasst, der eine im Wesentlichen gleichmäßige Dicke und eine asymmetrische Struktur aufweist und der im Wesentlichen vollständig durchlässig ist, wobei das selektive Adsorptionsmittel ein Zeolith ist und der Zeolith 50 bis 86 Gew.-% des flexiblen adsorbierenden Bogens ausmacht; und wobei der Bogen, der eine asymmetrische Struktur aufweist, eine Seite, die eine dichte Polymeroberfläche umfasst, und eine Rückseite, die eine dichte adsorbierende Oberfläche umfasst, aufweist.

2. Flexibler adsorbierender Bogen nach Anspruch 1, wobei das selektive Zeolith-Adsorptionsmittel unter Zeolith A, MFI, Zeolith L, Beta-Zeolith, Zeolith X, Zeolith Y, kationengetauschten Formen von Zeolith X, kationenionengetauschten Formen von Zeolith Y und Gemischen davon ausgewählt wird.

3. Flexibler adsorbierender Bogen nach einem der Ansprüche 1 oder 2, wobei das Polymerbindemittel ein Polymer umfasst, das unter Polysulfon, Polyethersulfon, Polyamid, Polyimid, Polyetherimid, Cellulosenitrat, Polyurethan, Polycarbonat, Polystyrol, und Gemischen davon ausgewählt wird oder eine Cellulosemembran ist, die unter Celluloseacetat, Cellulosediacetat, Cellulosetriacetat, Cellulosepropionat, Cellulosebutyrat, Cellulosecyanoethylat, Cellulosemethacrylat und Gemischen davon ausgewählt wird.

4. Flexibler adsorbierender Bogen nach einem der Ansprüche 1 bis 3, der weiterhin eine Gewebeschicht umfasst, die auf einer ersten Seite des flexiblen adsorbierenden Bogens angeordnet ist, wobei die erste Seite im Wesentlichen aus dem selektiven Adsorptionsmittel besteht.

5. Verfahren zur Herstellung eines flexiblen adsorbierenden Bogens nach Anspruch 1, das umfasst:
(a) Auflösen eines filmbildenden Polymers in einem organischen Lösemittel zur Bildung einer Polymerlösung;
(b) Dispergieren eines selektiven Adsorptionsmittels in der Polymerlösung zur Bildung einer viskosen Dispersionslösung;
(c) Gießen der viskosen Dispersionslösung auf einen porösen Träger zur Bildung einer asymmetrischen Gussschicht von im Wesentlichen gleichmäßiger Dicke;
(d) Eintauchen der asymmetrischen Gussschicht in ein Antilösemittel, um das organische Lösemittel herauszulösen und um einen feuchten flexiblen adsorbierenden Bogen zu bilden; und
(e) Trocknen des feuchten adsorbierenden Bogens zur Bildung des flexiblen adsorbierenden Bogens.

6. Verfahren nach Anspruch 5, wobei das organische Lösemittel unter Dioxan, Aceton, 1-Methyl-2-pyrrolidon, Dimethylformamid und Dimethylacetamid ausgewählt wird und das selektive Zeolithadsorptionsmittel unter Zeolith A, Zeolith L, MFI, Mordenit, Beta-Zeolith, Zeolith P, Zeolith X, Zeolith Y, kationenionengetauschten Formen von Zeolith X, kationenionengetauschten Formen von Zeolith Y und Gemischen davon ausgewählt wird.

7. Verfahren nach Anspruch 5 oder 6, wobei der flexible adsorbierende Bogen, der eine gleichmäßige Dicke hat, eine erste Seite und eine zweite Seite aufweist, wobei die erste Seite durch die Schritte (c) bis (e) beschichtet wird, und das weiterhin das Beschichten entweder der ersten Seite oder der zweiten Seite durch Wiederholen der Schritte (c) bis (e) zur Erhöhung der gleichmäßigen Dicke des adsorbierenden Bogens umfasst.

8. Saubere Austauschoberfläche, die eine glatte Oberfläche umfasst, auf der der flexible adsorbierende Bogen nach Anspruch 1 angeordnet ist.

## Revendications

1. Feuille adsorbante souple à utiliser dans des processus de sorption, ladite feuille adsorbante comprenant un adsorbant sélectif et une coulée de liant polymère pour former ladite feuille adsorbante souple, ayant une épaisseur essentiellement uniforme, une structure asymétrique et étant essentiellement totalement perméable, dans laquelle ledit adsorbant sélectif est une zéolithe, et ladite zéolithe comprend entre 50 à 86% en poids de ladite feuille adsorbante souple ; et dans laquelle ladite feuille ayant une structure asymétrique possède une face comprenant une surface polymère dense et une face de dos comprenant une surface adsorbante dense.

2. Feuille adsorbante souple de la revendication 1, dans laquelle l'adsorbant sélectif en zéolithe est sélectionné du groupe constitué de zéolithe A, MFI, Zéolithe L, Zéolithe Bêta, Zéolithe X, Zéolithe Y, des formes échangeuses de cations de zéolithe X, des formes à échange ionique de cations de zéolithe Y, et leurs mélanges.

3. Feuille adsorbante souple de l'une quelconque des revendications 1 ou 2, dans laquelle le liant polymère comprend un polymère sélectionné du groupe constitué de polysulfone, polyéthersulfone, polyamide, polyimide, polyéthérimide, nitrate de cellulose, polyuréthanne, polycarbonate, polystyrène, et leurs mélanges ou est une membrane cellulosique sélectionnée du groupe constitué d'acétate de cellulose, diacétate de cellulose, triacétate de cellulose, propionate de cellulose, butyrate de cellulose, cyanoéthylate de cellulose, méthacrylate de cellulose, et leurs mélanges.

4. Feuille adsorbante souple de l'une quelconque des revendications 1 à 3, comprenant en plus une couche de tissu disposée sur une première face de ladite feuille adsorbante souple, ladite première face constituée essentiellement de l'adsorbant sélectif.

5. Procédé de préparation d'une feuille adsorbante souple selon la revendication 1, comprenant le fait de :
(a) dissoudre un polymère de formation de film dans un solvant organique afin de former une solution polymère ;
(b) disperser un adsorbant sélectif dans la solution polymère afin de former un additif de dispersion visqueux ;
(c) faire couler l'additif de dispersion visqueux sur un support poreux afin de former une couche de coulée asymétrique d'une épaisseur essentiellement uniforme ;
(d) plonger la couche de coulée asymétrique dans un anti-solvant afin d'extraire le solvant organique et former une feuille adsorbante humide souple ; et
(e) sécher la feuille adsorbante humide afin de former la feuille adsorbante souple.

6. Procédé de la revendication 5, dans lequel le solvant organique est sélectionné du groupe constitué de dioxane, acétone, 1-méthyl-2-pyrrolidone, diméthylformamide, et diméthylacétamide et l'adsorbant sélectif en zéolithe est sélectionné du groupe constitué de zéolithe A, zéolithe L, MFI, mordénite, zéolithe Bêta, zéolithe P, zéolithe X, zéolithe Y, des formes à échange ionique de cations de zéolithe X, des formes à échange ionique de cations de zéolithe Y, et leurs mélanges.

7. Procédé des revendications 5 ou 6, dans lequel la feuille adsorbante souple ayant une épaisseur uniforme a une première face et une deuxième face, ladite première face étant revêtue par les étapes (c) à (e) et comprenant en plus soit le revêtement de la première face soit le revêtement de la deuxième face en répétant les étapes (c) à (e) afin d'augmenter l'épaisseur uniforme de la feuille adsorbante.

8. Surface d'échange nette comprenant une surface lisse sur laquelle est disposée la feuille adsorbante souple de la revendication 1.
